# NEUE EUROPÄISCHE PATENTSCHRIFT

(11) **EP 1 110 784 B2**
(45) Veröffentlichungstag und Bekanntmachung des Hinweises auf die Entscheidung über den Einspruch: **31.10.2007**
(45) Hinweis auf die Patenterteilung: 14.04.2004
(21) Anmeldenummer: 00127884.5
(22) Anmeldetag: 20.12.2000
(51) Int. Cl.: B60J 7/12, B60J 7/185

(54) **Verschlussvorrichtung für ein Fahrzeugverdeck**
Locking device for a foldable vehicle cover
Dispositif de verrouillage pour une capote pliable

(30) Priorität: 22.12.1999 DE 19962069
(43) Veröffentlichungstag der Anmeldung: 27.06.2001
(73) Patentinhaber: Edscha Cabrio-Dachsysteme GmbH, 94491 Hengersberg (DE)
(72) Erfinder: Haber, Franz, 94574 Wallerfing (DE); Rauscher, Michael, 94469 Deggendorf (DE)
(74) Vertreter: Sparing, Rolf Klaus

(56) Entgegenhaltungen:
- EP-A- 0 850 793
- DE-C- 19 602 185
- US-A- 4 136 906
- US-A- 5 042 869
- US-A- 5 085 483
- US-A- 5 328 229

## Beschreibung

Die vorliegende Erfindung betrifft eine Verschlußvorrichtung nach dem Oberbegriff des Patentanspruchs 1.

Aus der Praxis des Fahrzeugbaus bekannte derartige Verschlußvorrichtungen für ein Fahrzeugverdeck, beispielsweise ein Faltverdeck eines Cabrios, weisen eine Verriegelungseinrichtung auf, mit der das Verdeck zum Beispiel an einem Windschutzscheibenrahmen eines Kraftfahrzeuges verriegelbar ist. Zur Betätigung der Verschlußvorrichtung ist ein Handgriff vorgesehen, mit dem die Verriegelungseinrichtung geöffnet bzw. geschlossen werden kann.

Bei der bekannten Verschlußvorrichtung wird der Handgriff lediglich manuell, unterstützt durch sein Eigengewicht, aus seiner Ruheposition heraus verlagert. Entweder liegt der Handgriff dabei auf einer Innenraumverkleidung des Fahrzeugs auf, so daß er in den Innenraum ragt und dementsprechend stört, oder er ist in einer Vertiefung angeordnet und dann manuell nur schwer zu greifen.

Die EP 0 850 793 A1 beschreibt eine Verschlußvorrichtung für ein Cabriolet-Verdeck, bei der ein drehbar betätigbarer Handgriff zunächst durch das Betätigen einer Taste aus einer Ruheposition in eine Betätigungsposition herunterklappt. Durch eine Sperre kann der Griff nicht gedreht werden, solange er nicht vollständig in seine Betätigungsposition verschwenkt wurde. Ein Sperre, die während der Drehung des Griffs zur Betätigung der weiteren Verschlußvorrichtung ein Umklappen des Griffs in Richtung seiner Ruheposition blockiert, ist nicht vorgesehen.

Im Stand der Technik ist ein Cabriolet-Fahrzeug mit einer Verschlußvorrichtung nach dem Oberbegriff des Anspruchs 1 bekannt. Hierbei ist für den Handgriff eine Umklappsperre vorgesehen, die den Handgriff in seiner Betätigungsposition bezüglich seiner Klappachse lösbar festlegt. Eine solche Umklappsperre ist durch einen in einem Drehkreuz parallel zur vertikalen Achse verschieblich geführten Sperrstift realisiert. An seiner dem Handgriff entgegengesetzten Seite ist der Sperrstift in Kontakt mit einer rampenförmigen ansteigenden Bahnkurve. Bei Drehung des Handgriffs ausgehend von seiner Ruheposition, wenn er bereits um die horizontale Achse verschwenkt ist, gleitet dann der Sperrstift die Bahnkurve hinauf, so dass er in Richtung des Handgriffs verlagert wird. Hierdurch gelangt der Sperrstift in eine Bohrung des Handgriffs und verriegelt somit den Handgriff gegen ein Zurückschwenken um die horizontale Achse. Eine solche Umklappsperre ist jedoch durch den fortwährenden Schleifkontakt zwischen Sperrstift und Bahnkurve verschleißanfällig. Des weiteren klappt der Handgriff nach dem Drücken einer Taste unkontrolliert von seiner Ruheposition sofort in eine Endstellung aus, was ggf. zu einem störenden Kontakt mit dem Benutzer führt.

Im Stand der Technik ist ein weiteres Cabriolet-Fahrzeug mit einer Verschlußvorrichtung für ein Fahrzeugverdeck bekannt, bei der ein Handgriff manuell von seiner Ruheposition direkt in seine Endstellung aufgeschwenkt werden kann. Das Ausklappen des Handgriffs erfolgt jedoch nicht automatisch nach dem Drücken einer Taste. Zudem ist das Aufschwenken des Handgriffs aus seiner Ruheposition um eine horizontale Achse nur gegen einen bestimmten Federdruck möglich, was eine Bedienerfreundlichkeit beeinträchtigt.

DE 32 01 895 A1 beschreibt eine Verschlußvorrichtung für ein Fahrzeugverdeck, bei der ein Bedienhebel zunächst durch eine Taste entriegelt wird, woraufhin er aus einer Ruheposition in eine Betätigungsposition verschwenkt. Die Betätigung der Verschlußvorrichtung erfolgt durch ein manuelles Weiterschwenken des Hebels.

DE 196 29 197 C2 beschreibt einen manuell ausschwenkbaren Haltegriff für Kraftfahrzeuge, der mittels einer Dämpfungseinrichtung in seiner Schwenkbewegung gehemmt wird. Insbesondere wird eine federgetriebene Rückbewegung des Griffs gehemmt, um ein störendes Anschlaggeräusch nach dem Loslassen des Hebel zu vermeiden.

DE 196 02 185 C1 beschreibt einen Betätigungshebel für ein Cabriolet-Verdeck, welcher ausschließlich um eine einzige Achse schwenkbar ist, wobei der Hebel in einer Schließstellung mittels einer Drucktaste lösbar arretierbar ist und wobei der Hebel eine Offenstellung und eine Greifstellung aufweist.

US 4,136,906 beschreibt eine Betätigungsvorrichtung für ein Cabriolet-Verdeck, wobei ein Handgriff sowohl um eine Schwenkachse als auch zur Betätigung des Verschlusses um eine Drehachse bewegbar ist.

US 5,042,869 beschreibt eine Verschlußvorrichtung für ein Cabriolet-Verdeck, bei der ein Handgriff sowohl um eine Schwenkachse als auch zur Betätigung des Verschlusses um eine Drehachse bewegbar ist.

US 5,328,229 beschreibt eine Verschlußvorrichtung für ein Cabriolet-Verdeck, bei der ein Handgriff zur Betätigung des Verschlusses ausschließlich um eine horizontale Schwenkachse bewegbar ist.

US 5,085,483 beschreibt eine Verschlußvorrichtung für ein Cabriolet-Verdeck, bei der ein Handgriff zur Betätigung des Verschlusses ausschließlich um eine senkrechte Schwenkachse bewegbar ist.

Demgegenüber ist es die Aufgabe der Erfindung, eine Verschlußvorrichtung nach dem Oberbegriff des Anspruchs 1 zu schaffen, bei der kostengünstig und mit einfachen Mitteln die Handhabungssicherheit der Betätigung der Verschlußvorrichtung verbessert ist.

Diese Aufgabe wird für eine vorgenannte Verschlußvorrichtung mit den kennzeichnenden Merkmalen des Anspruchs 1 gelöst.

Demnach weist die erfindungsgemäße Verschlußvorrichtung, die insbesondere für ein Fahrzeugverdeck vorgesehen ist, eine Verriegelungseinrichtung auf, mit der das Fahrzeugverdeck in der geschlossenen Stellung verriegelbar ist. Die Verschlußvorrichtung umfasst einen um eine Klappachse verschwenkbaren und um eine Drehachse verdrehbaren Handgriff, der zur Betätigung der Verriegelungseinrichtung vorgesehen ist, wobei der Handgriff nach dem Drücken einer Taste automatisch aus seiner Ruheposition ausklappt. An dem Handgriff ist eine Umklappsperre vorgesehen, durch die der Handgriff in seiner Betätigungsposition bezüglich seiner Klappachse lösbar festlegbar ist, wobei der Handgriff durch einen Gleitbolzen verlagerbar ist, der den Handgriff nach der Freigabe in eine erste Klappstellung ausklappt und wobei der Handgriff manuell von der ersten Klappstellung in eine zweite Klappstellung verlagerbar ist, wobei der Handgriff ausgehend von der zweiten Klappstellung in seine Betätigungsposition gelangt.

Die Vorteile der erfindungsgemäßen Verschlußvorrichtung sind, daß zum einen der Handgriff vollständig in einer Innenraumverkleidung (Blende) des Fahrzeuges eingebettet werden kann und trotzdem noch bedienbar ist, sowie zum anderen eine Umklappsperre für den Handgriff in die Verschlußvorrichtung integrierbar ist, die ein versehentliches Einklemmen einer Hand zuverlässig verhindert, wenn mit der Hand das entriegelte Verdeck nach oben gedrückt wird.

Durch das vollständige Einbetten des Handgriffs in die Blende ist die Verletzungsgefahr für einen Insassen deutlich reduziert.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert:
- Fig. 1: zeigt eine Querschnittansicht eines Teils der Verriegelungsvorrichtung nach der vorliegenden Erfindung;
- Fig. 2: zeigt eine vergrößerte Teilansicht nach Fig. 1;
- Fig. 3: zeigt eine weitere Querschnittansicht gemäß Fig. 1, jedoch mit einem um ca. 30° ausgeklappten Handgriff;
- Fig. 4: zeigt eine weitere Querschnittansicht gemäß Fig. 1, jedoch mit einem um ca. 90° ausgeklappten Handgriff;
- Fig. 5: zeigt eine weitere Querschnittansicht gemäß Fig. 4, jedoch mit einem um 90° verdrehten Handgriff;
- Fig. 6: zeigt eine perspektivische Ansicht der erfindungsgemäßen Verriegelungsvorrichtung; und
- Fig. 7: zeigt eine weitere perspektivische Ansicht der erfindungsgemäßen Verriegelungsvorrichtung.
- Fig. 8: zeigt einen vergrößerten Ausschnitt aus Fig. 3.

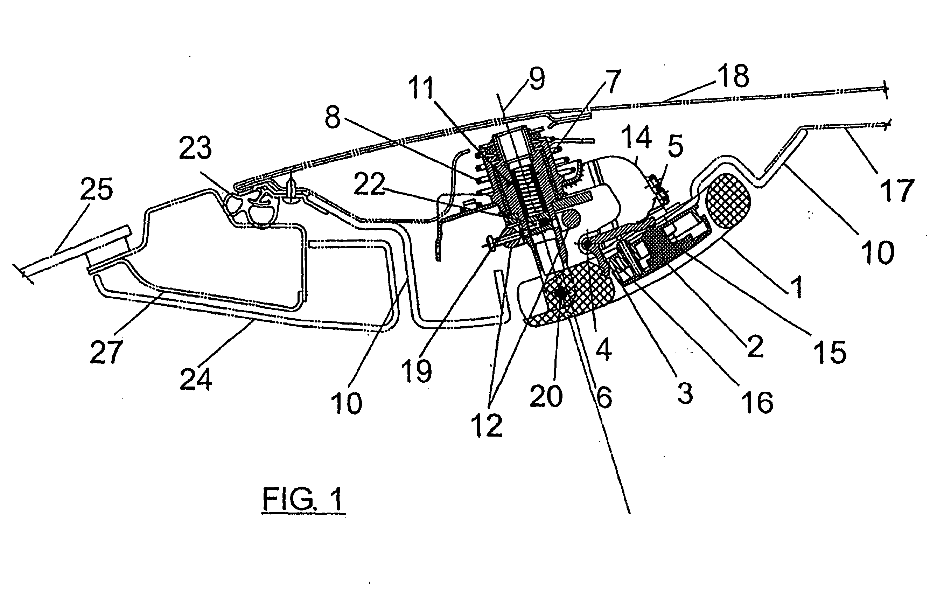

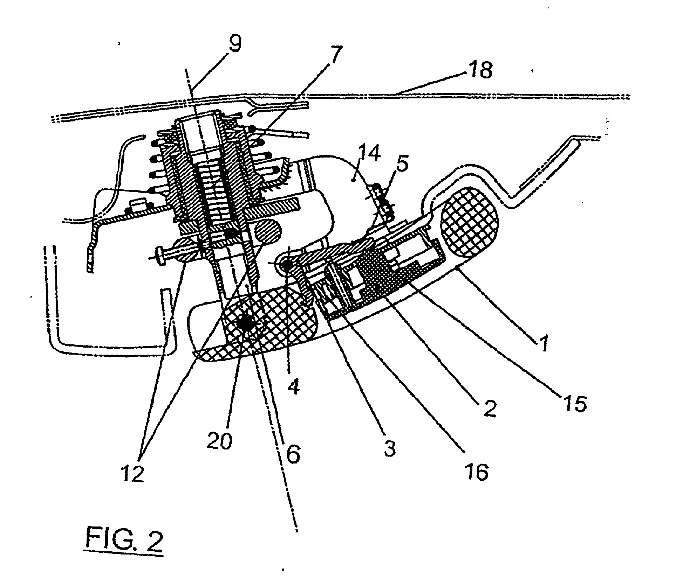

In Fig. 1 und 2 ist jeweils in einer Querschnittansicht die erfindungsgemäße Verschlußvorrichtung dargestellt, wobei die Darstellung nach Fig. 2 gegenüber Fig. 1 vergrößert ist.

In Fig. 1 und 2 befindet sich in der unteren Bildhälfte ein Fahrzeuginnenraum, über dem das Verdeck des Fahrzeugs, beispielsweise ein Faltverdeck, aufgespannt ist. Das Verdeck nach Fig. 1 weist einen Innenhimmel 17 und einen Verdeckstoff 18 auf. Im vorderen Bereich (auf das Fahrzeug bezogen) des Verdecks befindet sich die erfindungsgemäße Verschlußvorrichtung, deren (Haupt-) Drehachse 9 etwa mittig in Fig. 1 eingezeichnet ist.

Zum Fahrzeuginnenraum hin sind am Verdeck mehrere Blenden 10 vorgesehen; an einem Windschutzscheibenrahmen 27, der eine Windschutzscheibe 25 trägt, ist eine Fahrzeugfeste Blende 24 vorgesehen.

Zwischen dem Windschutzscheibenrahmen 27 und dem Verdeck ist eine Dichtung 23 angeordnet, die das Verdeck abdichtet.

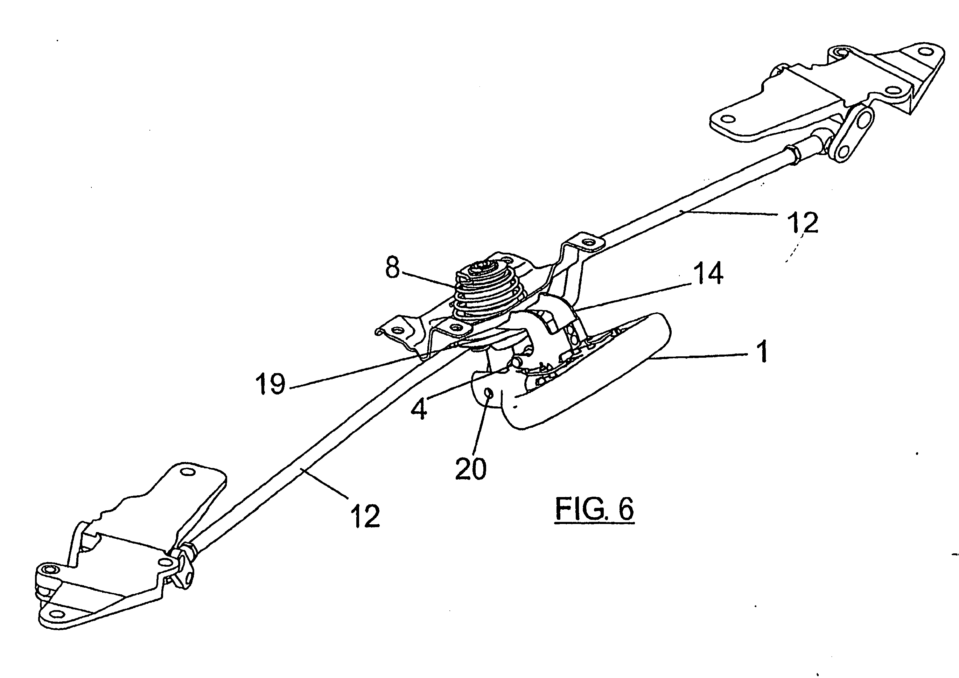

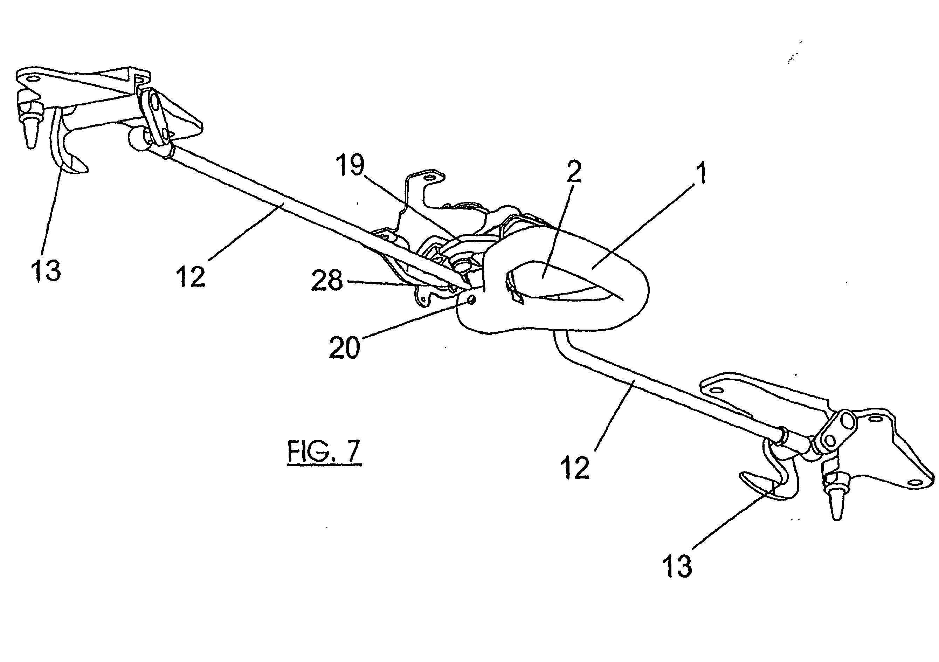

Ein Handgriff 1 ist an der Verschlußvorrichtung vorgesehen, mit dem eine Verschlußeinrichtung betätigt werden kann, die Teil der Verschlußvorrichtung ist und im wesentlichen ein Paar von Zugstangen 12 umfaßt, die am besten in Fig. 6 und 7 zu erkennen sind. Die Zugstangen 12 stellen die Verbindung zwischen dem zentralen Abschnitt der Verschlußvorrichtung, an dem der Handgriff 1 angeordnet ist und den beiden (fahrzeugbezogen) außen liegenden Abschnitten her, an denen jeweils ein Verriegelungshaken 13 angeordnet ist, der das Verdeck am Fahrzeug verriegelt.

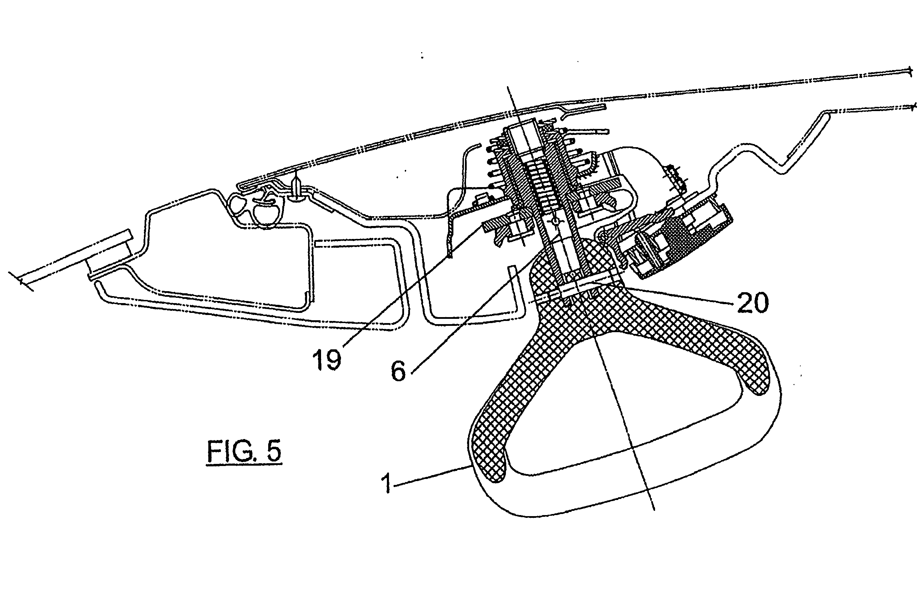

Der Handgriff 1 ist bevorzugt derart angeordnet, daß er nahezu vollständig in der' Blende 10 eingebettet ist. Der Handgriff 1 hat eine ringförmige Gestalt, jedoch nicht kreisförmig, sondern im wesentlichen triangelförmig, so daß ein breiter Basisabschnitt ausgebildet ist, der mit einer Hand gut zu greifen ist. Diese Triangelform ist in Fig. 5 zu erkennen.

Innerhalb der Öffnung dieser Triangelform des Handgriffs 1 ist eine Taste 2, vorzugsweise eine Drucktaste angeordnet. Die Taste 2 steht mit einem Mechanismus in Wirkverbindung, der ein automatisches Ausklappen des Handgriffs 1 bewirkt, wenn die Taste 2 gedrückt wird und sich der Handgriff 1 in seiner Ruheposition befindet, die in Fig. 1 und 2 dargestellt ist.

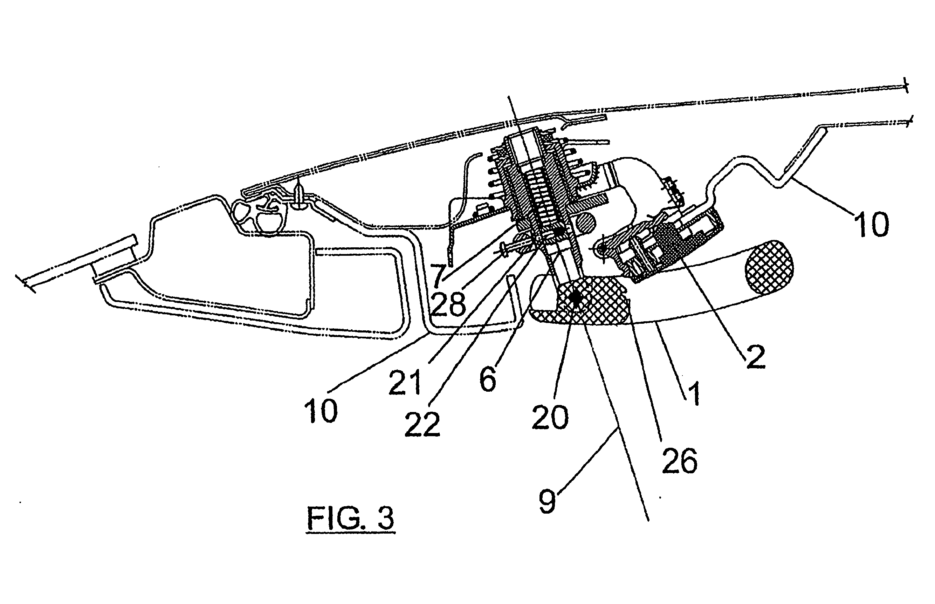

Die Taste 2 ist an einer Drucktastenaufnahme 16 gelagert und abgestützt, die die Taste 2 führt und positioniert. Zwischen der Taste 2 und der Drucktastenaufnahme 16 ist eine Blattfeder 15 angeordnet, die die Taste 2 derart beaufschlagt, daß ein vorbestimmter Abstand zwischen der Taste 2 und der Drucktastenaufnahme 16 vorliegt. Durch Niederdrücken der Taste 2 wird die Blattfeder 15 ausgelenkt und die Taste 2 in eine Position gebracht, wie sie in Fig. 3 dargestellt ist. Das Niederdrücken der Taste 2 bewirkt, daß ein Fortsatz an der Taste 2 mit einem Endabschnitt eines Verriegelungshebels 3 in Eingriff gelangt. Der Verriegelungshebel 3 hat eine im wesentlichen L-förmige Gestalt und ist an einer Schwenkachse 4 verschwenkbar gelagert.

Durch die Betätigung der Taste 2 wird der Verriegelungshebel 3 verschwenkt (in Fig. 1 bis 3 gegen den Uhrzeigersinn). Dieser Verschwenkbewegung wirkt eine weitere Blattfeder, das Federelement 5, entgegen, die den Verriegelungshebel 3 direkt beaufschlagt.

Der zweite Endabschnitt des Verriegelungshebels 3 hat einen Hakenabschnitt, der mit einer Vertiefung 26 (Fig. 3) am Handgriff 1 in Eingriff steht, wenn sich dieser in der Ruheposition befindet. Wird die Taste 2 gedrückt, so wird dieser Eingriff zwischen dem Hakenabschnitt des Verriegelungshebels 3 und der Vertiefung 26 am Handgriff 1 gelöst.

Der Handgriff 1 ist um eine Klappachse 20 verschwenkbar an einem Drehkreuz 11 gelagert. Beim Lösen des Handgriffs 1 mittels der Taste 2 gelangt ein Gleitbolzen 6, der von einer Druckfeder 7 beaufschlagt wird, mit dem Ende des Handgriffs 1 in Anlage, welches benachbart der Klappachse 20 angeordnet ist. In Fig. 1 und 2 ist gut zu erkennen, daß dieses Ende des Handgriffs 1 eine schräge Fläche aufweist, an der der Gleitbolzen 6 nur punktförmig anliegt. Sobald nun der Handgriff 1 gelöst ist und sich aus seiner Ruheposition bewegen kann, drückt die Druckfeder 7 auf den Gleitbolzen 6, der wiederum eine Kraft auf den Handgriff 1 ausübt. Diese Kraft führt zu einem Ausklappen des Handgriffs 1, bis die Stellung des Handgriffs 1 nach Fig. 3 erreicht ist. Dann liegt der Gleitbolzen 6 flächig am Handgriff 1 an.

Diese Stellung des Handgriffs 1 wird als erste Klappstellung bezeichnet (Fig. 3).

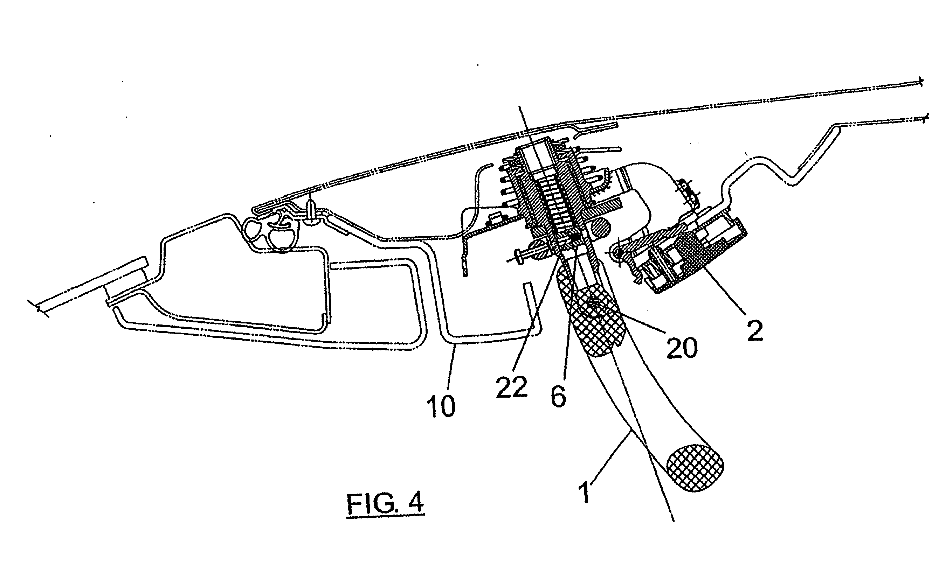

In dieser ersten Klappstellung, die etwa 30° relativ zu der Ruheposition verläuft, kann der Handgriff 1 bequem mit der Hand gefaßt werden. Von dieser ersten Klappstellung aus wird der Handgriff 1 dann manuell in die zweite Klappstellung verdreht, in der der Handgriff 1 ca. um 90° relativ zu der Ruheposition ausgeklappt wird.
Diese zweite Klappstellung des Handgriffs ist in Fig. 4 dargestellt.

In der zweiten Klappstellung des Handgriffs 1 kann dieser um die Drehachse 9 manuell gedreht werden, wodurch die oben bereits erwähnten Zugstangen 12 mittels der Drehkreuze 11 und 19 verlagert werden und damit die Verriegelungshaken 13 der Verriegelungseinrichtung verschwenkt werden.

Nach dem Entriegelungsvorgang kann das Verdeck manuell nach oben gedrückt werden und nach hinten abgelegt werden, um in einem Verdeckkasten verstaut zu werden.

Damit die Bedienperson bei diesem Hochdrücken des Verdecks nicht Gefahr läuft, sich die Hand oder die Finger im Bereich des Handgriffs 1 einzuklemmen, ist nach der vorliegenden Erfindung eine Umklappsperre in der Verschlußvorrichtung integriert, die ein Zurückklappen des Handgriffs 1 aus der zweiten Klappstellung heraus verhindert.

Im folgenden wird der Aufbau der Verriegelungseinrichtung beschrieben. An der Drehachse 9 sind die beiden Drehkreuze 11 und 19 angebracht, wobei die beiden Drehkreuze 11 und 19 drehfest miteinander verbunden sind. In dem hohlzylindrisch ausgebildeten ersten Drehkreuz 11 ist der Gleitbolzen 6 axial verlagerbar untergebracht. Der Gleitbolzen 6 wird von der Druckfeder 7 beaufschlagt. An dem zweiten (Blech-) Drehkreuz 19 sind die Zugstangen 12 angelenkt.

Über die Klappachse 20 ist der Handgriff 1 mit dem Drehkreuz 11 fest verbunden. Eine Drehbewegung an dem ausgeklappten Handgriff 1 wird über die Klappachse 20 auf die Drehkreuze 11 und 19 übertragen. Durch die Drehung des Drehkreuzes 19 wird jede Zugstange 12 verlagert und durch die Verlagerung der Zugstange 12 wird der im Außenbereich des Fahrzeugs angeordnete Verriegelungshaken 13 verschwenkt. Hierzu ist eine Hebel-Gelenk-Kinematik zwischen jeder Zugstange 12 und dem zugehörigen Verriegelungshaken 13 angeordnet.
Um das Drehkreuz 11 herum ist eine Drehfeder 8 vorgesehen (Fig. 1), die mit dem Drehkreuz 11 verbunden ist und eine Kraft derart auf das Drehkreuz 11 aufbringen kann, daß ein Rückdrehen des Drehkreuzes 11 bewirkbar ist. Mit Rückdrehen ist dabei gemeint, daß vorher mit der Handgriff 1 eine entsprechende gegensinnige Drehung des Drehkreuzes 11 zum Entriegeln der Verriegelungseinrichtung ausgeführt worden ist.

Im Bereich der Anlenkung der Zugstangen 12 ist am Drehkreuz 11 eine Bohrung 22c vorgesehen, die einen gestuften Aufbau hat. Die Bohrung 22c hat innen einen größeren Durchmesser als außen. Ein Bolzen 28 verläuft durch die Zugstange 12 (links in Fig. 2) und dieser Bolzen 28 ist durch eine Entriegelungsfeder 21 belastet.

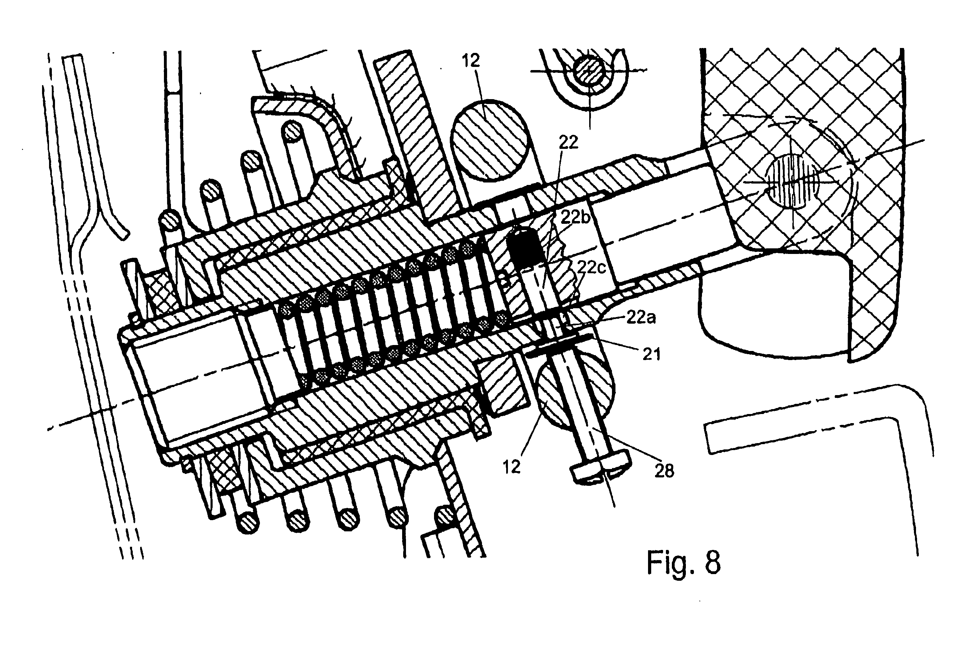

Am Gleitbolzen 6 ist eine Bohrung vorgesehen, in der ein Zylinderstift 22 (Fig. 3 und 8) angeordnet ist Der Zylinderstift 22 ist durch eine Feder 22b (Fig. 8) in eine Richtung federbelastet. Im Zustand nach Fig. 1 sind die Bohrungen im Gleitbolzen 6 und im Drehkreuz 11 nicht zueinander ausgerichtet. Im Zustand nach Fig. 3 oder 4 sind die Bohrungen ausgerichtet, so daß der Zylinderstift 22 aus dem Gleitbolzen 6 ein Stück nach außen verlagert werden kann (federbelastet) und in den Abschnitt mit größerem Durchmesser der Bohrung 22c am Drehkreuz 11 eingreifen kann.

Sobald der Zylinderstift 22 aus dem Gleitbolzen 6 ein Stück übersteht und in die Bohrung 22c (siehe Fig. 8) am Drehkreuz 11 eingreift, sind diese beiden Bauteile miteinander verriegelt (axial und drehfest). Hierdurch wird die Umklappsperre des Handgriffs 1 ausgebildet. Der Gleitbolzen 6 kann sich dann nicht mehr axial verlagern, relativ zum Drehkreuz 11 gesehen, so daß sich auch der Handgriff 1, der sich mit dem Gleitbolzen 6 in Anlage befindet, nicht mehr verlagern kann bzw. nicht mehr um die Klappachse 20 verschwenken kann.

Wie aus Fig. 8 erkennbar ist, wird durch die Entriegelungsfeder 21 ein in die abgestufte Bohrung 22c von außen eingesetzter Riegelstift 22a in der Bohrung 22c gehalten. Der Durchmesser des Riegelstifts 22a entspricht etwa dem kleineren Durchmesser der abgestuften Bohrung 22c. Wie aus Fig. 3 und Fig. 4 erkennbar ist, ist das Eingreifen des Zylinderstifts 22 in die Bohrung 22c am Drehkreuz 11 mit der daraus resultierenden Umklappsperre durch axiales Blockieren des Gleitbolzens 6 nur dann möglich, wenn der Bolzen 28 nicht die Entriegelungsfeder 21 und mit ihr den Riegelstift 22a belastet. In der Grundstellung des Drehkreuzes ist dies nicht der Fall (siehe Fig. 1 bis 4). Wird der Handgriff und mit diesem das Drehkreuz 11 nur wenig aus der Grundstellung verdreht, so vergrößert sich zunächst der jeweils kleinste radiale Abstand der Zugstangen 12 und des an einer der Zugstangen 12 festgelegten Bolzens 28 von der Drehachse 9. Diese Bewegung wird durch die gekröpfte Ausbildung der Zugstangen 12, wie sie insbesondere aus Fig. 6 und 7 ersichtlich ist, ermöglicht. Durch diese Entfernung des Bolzens 28 von der Drehachse 9 belastet der Bolzen 28 nicht mehr die Entriegelungsfeder 21 und somit auch nicht mehr den Riegelstift 22a. Somit kann nun bei entsprechender Stellung des Gleitbolzens 6 der Zylinderstift 22 in die Bohrung 22c am Drehkreuz 11 eingreifen, wodurch die Umklappsperre des Handgriffs 1 aktiviert ist. Fig. 5 zeigt beispielhaft eine Drehstellung des Handgriffs 1, bei der die Umklappsperre aktiviert ist. Aufgrund der gekröpften Ausbildung der Zugstangen 12 wird jedoch nur ein Drehwinkel von wenigen Grad aus der Grundstellung heraus benötigt, um die Umklappsperre zu aktivieren.

In Umkehr der beschriebenen Kinematik führt ein Rückdrehen des Handgriffs und somit des Drehkreuzes 11 in seine Grundposition zu einem erneuten Belasten der Entriegelungsfeder 21 durch den Bolzen 28. Dadurch wird der Zylinderstift 22 aus der Bohrung 22c am Drehkreuz 11 herausgeschoben und die Umklappsperre gelöst. Ein Umklappen des Handgriffs 1 um seine Schwenkachse 20 ist nun wieder möglich.

Nicht dargestellt sind Dämpfungselemente, die eingebaut werden können, um das Klappen und Drehen des Handgriffs 1 abzudämpfen, um die Geschwindigkeit der Verlagerung des Handgriffs 1 zu beeinflussen.

Zusammenfassend kurz dargestellt, weist eine erfindungsgemäße Verschlußvorrichtung für ein Fahrzeugverdeck eine Verriegelungseinrichtung auf, mit der das Fahrzeugverdeck in der Geschlossenstellung des Verdecks verriegelbar ist, und hat einen Handgriff, der zur Betätigung der Verriegelungseinrichtung vorgesehen ist, wobei der Handgriff nach dem Drücken einer Taste automatisch aus seiner Ruheposition ausklappt. Zum einen kann der Handgriff dadurch vollständig in einer Innenraumverkleidung des Fahrzeuges eingebettet werden und trotzdem noch einfach bedient werden sowie zum anderen eine Umklappsperre für den Handgriff in die Verschlußvorrichtung integrierbar ist, die ein versehentliches Einklemmen einer Hand zuverlässig verhindert, wenn mit der Hand das entriegelte Verdeck nach oben gedrückt wird. Durch das vollständige Einbetten des Handgriffs in die Innenraumverkleidung ist die Verletzungsgefahr für einen Insassen deutlich reduziert.

Hinsichtlich vorstehend im einzelnen nicht näher erläuterter Merkmale der Erfindung wird in übrigen ausdrücklich auf die Patentansprüche und die Zeichnungen verwiesen.

## Patentansprüche

1. Verschlussvorrichtung für ein Fahrzeugverdeck, umfassend
eine Verriegelungseinrichtung, mit der das Fahrzeugverdeck in der Geschlossenstellung verriegelbar ist;
einen um eine Klappachse (20) verschwenkbaren und eine Drehachse (9) verdrehbaren Handgriff (1), der zur Betätigung der Verriegelungseinrichtung vorgesehen ist,
wobei der Handgriff (1) nach dem Drücken einer Taste (2) automatisch aus seiner Ruheposition ausklappt,
wobei an dem Handgriff (1) eine Umklappsperre vorgesehen ist, durch die der Handgriff (1) in seiner Betätigungsposition bezüglich seiner Klappachse (20) lösbar festlegbar ist,
**dadurch gekennzeichnet, dass**
der Handgriff (1) durch einen Gleitbolzen (6) verlagerbar ist, der den Handgriff (1) nach der Freigabe in eine erste Klappstellung ausklappt, und dass
der Handgriff (1) manuell von der ersten Klappstellung in eine zweite Klappstellung verlagerbar ist, wobei der Handgriff (1) ausgehend von der zweiten Klappstellung in seine Betätigungsposition gelangt.

2. Verschlussvorrichtung nach Anspruch 1, **dadurch gekennzeichnet, dass** der Gleitbolzen (6) durch eine Druckfeder (7) beaufschlagt ist.

3. Verschlussvorrichtung nach Anspruch 1 oder 2, **dadurch gekennzeichnet, dass** der Handgriff (1) in der zweiten Klappstellung durch die Umklappsperre am Einklappen in die Ruheposition gehindert ist.

4. Verschlussvorrichtung nach einem der Ansprüche 1 bis 3, **dadurch gekennzeichnet, dass** eine Drehfeder (8) vorgesehen ist, die den Handgriff (1) nach dem Öffnen und Ablegen des Fahrzeugverdecks automatisch um die Drehachse (9) in die zweite Klappstellung zurückdreht.

5. Verschlussvorrichtung nach einem der Ansprüche 1 bis 4, **dadurch gekennzeichnet, dass** die Umklappsperre an dem Gleitbolzen (6) ausgebildet ist.

6. Verschlussvorrichtung nach Anspruch 5, **dadurch gekennzeichnet, dass** an dem Gleitbolzen (6) ein federbelasteter Zylinderstift (22) ausgebildet ist, und dass an dem Drehkreuz 11 eine radiale Bohrung (22c) vorgesehen ist, deren innenseitiger Innendurchmesser größer oder gleich dem Durchmesser des Zylinderstifts (22) ist.

7. Verschlussvorrichtung nach Anspruch 6, **dadurch gekennzeichnet, dass** die Bohrung (22c) abgestuft ist, wobei der radial zum Drehkreuz (11) innenliegende Durchmesser der Bohrung (22c) größer als der radial zum Drehkreuz (11) außenliegende Durchmesser der Bohrung ist.

8. Verschlussvorrichtung nach Anspruch 6 oder 7, **dadurch gekennzeichnet, dass** im Bereich der Bohrung (22c) eine Entriegelungsfeder (21) vorgesehen ist.

9. Verschlussvorrichtung nach einem der Ansprüche 6 bis 8, **dadurch gekennzeichnet, dass** ein Bolzen (28) relativ zu dem Drehkreuz (11) bewegbar festgelegt ist, wobei der Bolzen (28) in einer Stellung des Drehkreuzes (11) an dem Zylinderstift (22) angreift.

10. Verschlussvorrichtung nach einem der Ansprüche 1 bis 9, **dadurch gekennzeichnet, dass** der Handgriff (1) in seiner Ruheposition durch einen Verriegelungshebel (3) fixiert ist.

11. Verschlussvorrichtung nach Anspruch 10, **dadurch gekennzeichnet, dass** die Taste (2) eine Drucktaste ist, die den Verriegelungshebel (3) betätigt und damit den Handgriff (1) freigibt.

12. Verschlussvorrichtung nach Anspruch 10 oder 11, **dadurch gekennzeichnet, dass** der Verriegelungshebel (3) an einer Schwenkachse (4) verschwenkbar angeordnet ist, wobei ein Federelement (5) den Verriegelungshebel (3) derart belastet, dass ein Eingriff mit dem Handgriff (1) in der Ruheposition vorliegt.

13. Verschlussvorrichtung nach Anspruch 12, **dadurch gekennzeichnet, dass** das Federelement (5) eine Blattfeder ist.

14. Verschlussvorrichtung nach einem der Ansprüche 1 bis 13, **dadurch gekennzeichnet, dass** die Umklappsperre in einer Grundstellung des Handgriffs (1) bezüglich der Drehachse (9) deaktiviert ist.

15. Verschlussvorrichtung nach Anspruch 14, **dadurch gekennzeichnet, dass** die Umklappsperre bei einer von der Grundstellung abweichenden Drehstellung des Handgriffs (1) um die Drehachse (9) aktiviert ist.

16. Verschlussvorrichtung nach einem der Ansprüche 1 bis 15, **dadurch gekennzeichnet, dass** der Handgriff (1) in der Ruheposition im wesentlichen vollständig in einer Blende (10) eingebettet ist.

17. Verschlussvorrichtung nach einem der Ansprüche 1 bis 16, **dadurch gekennzeichnet, dass** zumindest ein Dämpfungselement vorgesehen ist, mit dem die Geschwindigkeit des Klappens und Drehens des Handgriffs (1) beeinflußbar ist.

18. Verschlussvorrichtung nach Anspruch 17, **dadurch gekennzeichnet, dass** jeweils ein Dämpfungselement für das Klappen und das Drehen des Handgriffs (1) vorgesehen ist.

19. Verschlussvorrichtung nach einem der Ansprüche 1 bis 18, **dadurch gekennzeichnet, dass** der Handgriff (1) mit einem Drehkreuz (11) in Wirkverbindung steht, an dem zumindest eine Zugstange (12) derart angelenkt ist, dass bei einer Drehung des Drehkreuzes (11) die Zugstange (12) verlagert wird, die die Verriegelungseinrichtung betätigt.

20. Verschlussvorrichtung nach Anspruch 19, **dadurch gekennzeichnet, dass** die Verriegelungseinrichtung zumindest einen Verriegelungshaken (13) aufweist.

## Claims

1. Closure device for a vehicle top, comprising
a locking device with which the vehicle folding top can be locked in the closed position,
a handle (1) pivotal about a folding axis (20) and rotatable about an axis of rotation (9) and provided for actuating the locking device, the handle (1) automatically folding out from its rest position once a key (2) is pressed,
wherein an anti-fold lock is provided on the handle (1), via which the handle (1) can be releasably fixed in its actuating position with respect to its folding axis (20), **characterised in that**
the handle (1) can be moved by a sliding pin (6) which after release of the handle (1) folds the handle (1) out into a first folding position, and
**in that** the handle (1) can be manually moved from the first folding position into a second folding position wherein the handle (1) reaches its actuating position starting from the the second folding position.

2. Closure device according to claim 1, **characterised in that** the sliding pin (6) is pressurised by a compression spring (7).

3. Closure device according to claim 1 or 2, **characterised in that** the handle (1) is obstructed in the second folding position by the anti-fold lock, on folding into the rest position.

4. Closure device according to any of claims 1 to 3, **characterised in that** a compression spring (8) is provided which, after opening and storing of the vehicle folding top, automatically rotates the handle (1) back into the second folding position about the axis of rotation (9).

5. Closure device according to any of claims 1 to 4, **characterised in that** the anti-fold lock is constructed on the sliding pin (6).

6. Closure device according to claim 5, **characterised in that** a springloaded straight pin (22) is constructed on the sliding pin (6), and **in that** a radial hole (22c) is provided on the turning cross (11), the inner internal diameter of which hole is greater than or equal to the diameter of the straight pin (22).

7. Closure device according to claim 6, **characterised in that** the hole (22c) is stepped, the diameter of the hole (22c) located radially inwardly with respect to the turning cross (11) being greater than the diameter of the hole located radially outwardly with respect to the turning cross (11).

8. Closure device according to claim 6 or 7, **characterised in that** an unlocking spring (21) is provided in the region of the hole (22c).

9. Closure device according to any of claims 6 to 8, **characterised in that** a pin (28) is fixed so as to be movable relative to the turning cross (11), the pin (28) acting on the straight pin (22) in one position of the turning cross (11).

10. Closure device according to any of claims 1 to 9, **characterised in that** the handle (1) is fixed in its rest position by a locking lever (3).

11. Closure device according to claim 10, **characterised in that** the key (2) is a push-button actuating the locking lever (3) and therefore releasing the handle (1).

12. Closure device according to claim 10 or 11, **characterised in that** the locking lever (3) is pivotally arranged on a pivot axis (4), a spring element (5) loading the locking lever (3) such that there is engagement with the handle (1) in the rest position.

13. Closure device according to claim 12, **characterised in that** the spring element (5) is a leaf spring.

14. Closure device according to any of claims 1 to 13, **characterised in that** the anti-fold lock is deactivated in a basic position of the handle (1) with respect to the axis of rotation (9).

15. Closure device according to claim 14, **characterised in that** the anti-fold lock is activated in the event of a rotational position of the handle (1) about the axis of rotation (9) deviating from the basic position.

16. Closure device according to any of claims 1 to 15, **characterised in that** in the rest position, the handle (1) is embedded substantially completely in a panel (10).

17. Closure device according to any of claims 1 to 16, **characterised in that** at least one damping element is provided with which the speed of folding and rotation of the handle (1) can be influenced.

18. Closure device according to claim 17, **characterised in that** a respective damping element is provided for folding and rotation of the handle (1).

19. Closure device according to any of claims 1 to 18, **characterised in that** the handle (1) is in operative connection with a turning cross (11) to which at least one connecting rod (12) is articulated such that on a rotation of the turning cross (11) the connecting rod (12) is moved actuating the locking device.

20. Closure device according to claim 19, **characterised in that** the locking device comprises at least one locking hook (13).

## Revendications

1. Dispositif de fermeture pour capote de véhicule, comportant
un mécanisme de verrouillage permettant de verrouiller la capote de véhicule dans la position fermée,
une poignée (1) qui est apte à basculer autour d'un axe de basculement (20) et à tourner autour d'un axe de rotation (9) et qui est destinée à actionner le mécanisme de verrouillage,
la poignée (1) basculant automatiquement pour quitter une position de repos après avoir pressé un bouton (2),
un dispositif de blocage de basculement étant prévu à la poignée permettant de fixer, de façon amovible, la poignée (1) dans sa position d'actionnement par rapport à son axe de basculement (20), **caractérisé en ce que**
la poignée (1) peut être déplacée au moyen d'un boulon coulissant (6) qui bascule la poignée (1), après l'avoir libérée, dans une première position de basculement, et que
la poignée (1) peut être déplacée manuellement de la première position de basculement dans une deuxième position de basculement, la poignée (1) arrivant à partir de la deuxième position de basculement à sa position d'actionnement.

2. Dispositif de fermeture selon la revendication 1, **caractérisé en ce que** le boulon coulissant (6) est sollicité par un ressort de compression (7).

3. Dispositif de fermeture selon la revendication 1 ou 2, **caractérisé en ce que** la poignée (1) dans la deuxième position de basculement est empêchée de basculer dans la position de repos par le dispositif de blocage de basculement.

4. Dispositif de fermeture selon l'une des revendications 1 à 3, **caractérisé en ce qu'**il est prévu un ressort de torsion (8) qui ramène automatiquement la poignée (1) dans la deuxième position de basculement en tournant autour de l'axe de rotation (9) après l'ouverture et la pose de la capote de véhicule.

5. Dispositif de fermeture selon l'une des revendications 1 à 4, **caractérisé en ce que** le dispositif de blocage de basculement est conformé au niveau du boulon coulissant (6).

6. Dispositif de fermeture selon la revendication 5, **caractérisé en ce qu'**une goupille cylindrique (22) contrainte par ressort est conformée au niveau du boulon coulissant (6) et **en ce qu'**il est prévu au niveau du croisillon rotatif (11) un perçage radial (22) dont le diamètre intérieur est supérieur ou égal ou diamètre de la goupille cylindrique (22).

7. Dispositif de fermeture selon la revendication 6, **caractérisé en ce que** le perçage (22c) est conformé en gradins, le diamètre intérieur du perçage (22) radialement par rapport au croisillon rotatif (11) étant supérieur au diamètre extérieur du perçage radialement par rapport au croisillon rotatif (11).

8. Dispositif de fermeture selon la revendication 6 ou 7, **caractérisé en ce qu'**il est prévu un ressort de déverrouillage (21) au niveau du perçage (22c).

9. Dispositif de fermeture selon l'une des revendications 6 à 8, **caractérisé en ce qu'**un boulon (28) est fixé de façon à être mobile par rapport au croisillon rotatif (11), le boulon (28) s'engageant avec la goupille cylindrique (22) dans une position du croisillon rotatif (11).

10. Dispositif de fermeture selon l'une des revendications 1 à 9, **caractérisé en ce que** la poignée (1) est fixée dans sa position de repos par un levier de verrouillage (3).

11. Dispositif de fermeture selon la revendication 10, **caractérisé en ce que** le bouton (2) est un bouton-poussoir qui actionne le levier de verrouillage (3) et libère ainsi la poignée (1).

12. Dispositif de fermeture selon la revendication 10 ou 11, **caractérisé en ce que** le levier de verrouillage (3) est disposé de façon à pouvoir pivoter autour d'un axe de pivotement (4), un élément élastique (5) contraignant le levier de verrouillage (3) de façon à pouvoir l'engager avec la poignée (1) dans la position de repos.

13. Dispositif de fermeture selon la revendication 12, **caractérisé en ce que** l'élément élastique (5) est un ressort à lame.

14. Dispositif de fermeture selon l'une des revendications 1 à 13, **caractérisé en ce que** le dispositif de blocage de basculement est désactivé dans une position de base de la poignée (1) par rapport à l'axe de rotation (9).

15. Dispositif de fermeture selon la revendication 14, **caractérisé en ce que** le dispositif de blocage de basculement est activé dans une position de rotation de la poignée (1) autour de l'axe de rotation (9) qui est écartée de la position de base.

16. Dispositif de fermeture selon l'une des revendications 1 à 15, **caractérisé en ce que** la poignée (1) est sensiblement totalement incorporée dans la position de repos dans un cadre (10).

17. Dispositif de fermeture selon l'une des revendications 1 à 16, **caractérisé en ce qu'**il est prévu au moins un élément amortisseur permettant d'influer sur la vitesse de basculement et de rotation de la poignée (1).

18. Dispositif de fermeture selon la revendication 17, **caractérisé en ce qu'**il est prévu à chaque fois un élément d'amortissement destiné au basculement et à la rotation de la poignée (1).

19. Dispositif de fermeture selon l'une des revendications 1 à 18, **caractérisé en ce que** la poignée (1) est en liaison active avec un croisillon rotatif (11), liaison au niveau de laquelle est articulée au moins une barre de traction (12) de façon à déplacer, lors d'une rotation du croisillon rotatif (11), la barre de traction (12) qui actionne le dispositif de verrouillage.

20. Dispositif de fermeture selon la revendication 19, **caractérisé en ce que** le dispositif de verrouillage comporte au moins un crochet de verrouillage (13).
